# EUROPÄISCHE PATENTSCHRIFT

(11) **EP 1 242 743 B1**
(45) Veröffentlichungstag und Bekanntmachung des Hinweises auf die Patenterteilung: **03.08.2005**
(21) Anmeldenummer: 00988780.3
(22) Anmeldetag: 09.12.2000
(51) Int. Cl.: F04C 18/16, F04C 29/04

(54) **SCHRAUBENVAKUUMPUMPE MIT EINEM KÜHLMITTELKREISLAUF**
SCREW VACUUM PUMP WITH A COOLANT CIRCUIT
POMPE A VIDE A VIS POURVUE D'UN CIRCUIT DE REFRIGERANT

(30) Priorität: 27.12.1999 DE 19963172
(43) Veröffentlichungstag der Anmeldung: 25.09.2002
(73) Patentinhaber: Leybold Vacuum GmbH, 50968 Köln (DE)
(72) Erfinder: KRIEHN, Hartmut, 50997 Köln (DE); BRENNER, Lothar, 53502 Bad Münstereifel (DE)
(74) Vertreter: Leineweber, Jürgen, Dipl.-Phys.
(86) Internationale Anmeldenummer: PCT/EP2000/012471
(87) Internationale Veröffentlichungsnummer: WO 2001/048385

(56) Entgegenhaltungen:
- EP-A- 0 290 663
- WO-A-99/42729
- FR-A- 1 290 239
- GB-A- 464 493

## Beschreibung

Die Erfindung betrifft eine Schraubenvakuumpumpe mit den Merkmalen des Oberbegriffs des Patentanspruchs 1.

Schraubenvakuumpumpen dieser Art sind aus den deutschen Anmeldeschriften 197 45 616, 197 48 385 und 198 00 825 bekannt. Da sie trocken (ohne Schmier- oder Kühlmittel im Schöpfraum) betrieben werden, besteht das Problem, die während ihres Betriebs entstehende Wärme, verursacht im wesentlichen durch die Kompression der geförderten Gase, abzuführen.

Bei der aus der DE-A-197 45 616 bekannten Schraubenvakuumpumpe mit fliegender Rotorlagerung sind Rotor und Welle mit einer zur Lagerseite hin offenen Sackbohrung ausgerüstet. In die Bohrung hinein ragt ein zentrales, gehäusefestes Kühlrohr, das lagerseitig aus der Bohrung herausgeführt ist und rotorseitig kurz vor dem Ende der Sackbohrung mündet. Mit Hilfe einer Kühlmittelpumpe wird Kühlmittel durch das zentrale Rohr in die Bohrung gefördert. Es strömt über den Ringraum zwischen dem festen Kühlrohr und der rotierenden Innenwandung der Sackbohrung zurück. Der Durchmesser der Bohrung in Welle und Rotor ist relativ klein, so dass die vom Kühlmittel überströmten Flächen ebenfalls klein sind. Außerdem treten zwischen dem gehäusefesten Rotor und rotierenden Hohlraumwand Scherkräfte auf, die im Kühlmittel unerwünschte Reibungen und damit eine Temperaturerhöhung erzeugen. Die Wirksamkeit der gewünschten Rotorkühlung ist aus diesen Gründen begrenzt.

In der DE-A-197 48 385 sind zwei Kühlverfahren offenbart. Bei einer ersten Lösung ist jeder der Rotoren mit einem einseitig offenen Hohlraum ausgerüstet, in den das Kühlmittel eingespritzt wird. Infolge der Rotation bildet sich auf der Innenwand des Rotors ein Film aus, der zur Hohlraumöffnung zurückströmt. Bei einer Filmkühlung dieser Art besteht die Gefahr, dass der Film abreißt, so daß die gewünschte Kühlung unterbrochen wird. Ergänzend wird vorgeschlagen, den Hohlraum im Rotor mit konischen Abschnitten auszurüsten, um die Verweildauer des Kühlmittels im Rotorhohlraum und damit auch die Wärmeaufnahme beeinflussen zu können. Bei solchen konischen Abschnitten, die die Förderung der Strömung unterstützen, besteht aber erst recht die Gefahr des Abreißens des Kühlmittelstromes. Filmkühlungen haben schließlich den generellen Nachteil, dass sich ein stationäres Strömungsprofil ausbildet, bei dem der wandnahe Schichtbereich des Films wesentlich langsamer strömt als der wandferne Schichtbereich. Der wandnahe Bereich bildet dadurch praktisch eine Isolierschicht, die die Wärmeabfuhr behindert. Zur Beseitigung dieses Nachteils wurde bereits vorgeschlagen, Strömungshindernisse vorzusehen, so dass das stationäre Strömungsprofil durch Turbolenzen unterbrochen wird. Dadurch kann zwischen den wandnahen und den wandfernen Schichtbereichen des Films ein Wärmeaustausch erreicht werden. Der Einbau von Strömungshindernissen ist jedoch aufwendig und verlangsamt insgesamt die Strömungsgeschwindigkeit des Kühlmittels.

Die DE-A-198 20 523 offenbart ein dem vorbeschriebenen Verfahren ähnliches Kühlsystem. Gekühltes Öl wird in ein hohles Wellenteil eingespritzt. Durch Fliehkraftwirkung gelangt es nach außen auf die Innenwandung des Hohlraumes, der sich in Richtung Auslassseite konisch erweitert.

Bei einer weiteren, in der DE-A-197 48 385 offenbarten Ausführungsform durchströmt das Kühlmittel einen Ringspalt zwischen der Rotorwelle und einem Lagersockel, der sich in den Rotorhohlraum erstreckt. Auf die Kühlung des Rotors selbst hat eine Kühlmittelströmung dieser Art wenig Einfluss.

Die DE 198 00 825 offenbart eine Schraubenspindelpumpe mit durchgehend hohlen Rotoren. Den Hohlräumen wird ständig Kühl-/Schmiermittel zugeführt bzw. abgeführt. Bezüglich der Lager, die auf der Kühlmittel-Abführseite angeordnet sind, ist eine kinematische Umkehr realisiert, d.h. sie haben einen feststehendem Innenring und einen rotierenden Außenring. Die Hohlräume können konisch (sich in Strömungsrichtung erweiternd) ausgebildet sein oder ein Innenfördergewinde aufweisen. Bei einer Schraubenspindelpumpe dieser Art bildet sich ein Kühlfilm aus, der hohe Drehzahlen bzw. Umfangsgeschwindigkeiten benötigt. Die bereits erwähnte Gefahr des Abreißens des Kühlfilms besteht. Überwachungseinrichtungen für eine gleichmäßige Verteilung der Kühlmittelmenge auf beide Rotoren werden deshalb unbedingt empfohlen. Auch die bereits beschriebene Notwendigkeit, im Film Turbolenzen zu erzeugen, besteht, um eine wirksame Kühlung zu erreichen. Schließlich hat die Ausrüstung eines Rotors mit einem konischen Hohlraum mehrere Nachteile: Der konische Hohlraum ist schwierig zu fertigen. Bei einer fliegenden Lagerung auf der Druckseite und einer Zuführung des Kühlmittels auf der Saugseite des Rotors ist die Rotormasse im lagerfernen Bereich hoch. Die fliegende Lagerung auf der Druckseite muss dementsprechend aufwendig gestaltet sein. Schließlich schränkt die Tatsache, dass das Kühlmittel auf der Druckseite relativ weit außen (mit großem radialen Abstand) abgeführt werden muss, die Konstruktionsmöglichkeiten ein.

Die DE-A-198 00 825 offenbart noch eine weitere Ausführung, bei der die Rotoren jeweils fliegend auf einem Wellenstumpf gelagert sind, der in einen nur lagerseitig offenen Hohlraum im Rotor hineinragt. Diese vorbeschriebenen Nachteile treffen auf diese Ausführung ebenfalls zu.

Eine Schraubenvakuumpumpe mit den Merkmalen des Oberbegriffs des Patentanspruchs 1 ist aus der FR 1290 239 bekannt. Sie besitzt ortsfeste Stümpfe (dennoch mit Wellen 14 bezeichnet), welche sich in die Hohlräume zweiteiliger Rotoren erstrecken. Die Hohlräume sind saugseitig durch Deckel abgeschlossen. Die Lagerung der Rotoren erfolgt jeweils saugseitig durch ein Wälzlager und druckseitig durch ein Gleitlager. Der saugseitige Abschnitt (33) des Rotors weist jeweils eine Hülse auf, die im druckseitigen Bereich gleitend auf der zugehörigen Welle gelagert ist. Auf der Hülse ist jeweils der druckseitige Abschnitt (34) des Rotors befestigt. Zwischen Hülse und Abschnitt (34) befindet sich jeweils ein von einem Kühlmittel durchströmter zylindrischer Spalt, der sich wegen der beschriebenen Bauweise nur über einen relativ kleinen Abschnitt der Gesamtlänge des Rotors erstrecken kann.

Bei allen beschriebenen Kühlsystemen besteht schließlich noch der Nachteil, dass die Kühlung nicht im Gegenstrom erfolgt. Das Kühlmittel wird jeweils der Saugseite des Rotors zugeführt und nicht der Druckseite, die von der Wärmeentwicklung in der Pumpe wesentlich stärker belastet ist.

Der vorliegenden Erfindung liegt die Aufgabe zugrunde, eine Pumpe der eingangs erwähnten Art mit einer wirksamen Kühlung auszurüsten, die es erlaubt, die Pumpe einfach, kompakt und preiswert herzustellen.

Erfindungsgemäß wird diese Aufgabe durch die kennzeichnenden Merkmale der Patentansprüche gelöst.

Es hat sich gezeigt, dass die erfindungsgemäße Kühlung, eine unerwartet gute Kühlwirkung hat, zumal der Ringspalt weit nach außen, also in die unmittelbare Nähe des Fußkreises des Rotorprofils und über im wesentlichen die gesamte wirksame Länge des Rotors angeordnet werden kann. Da das Kühlmittel nicht eingespritzt wird, sind die Kühlwirkung unterbrechende Hohlräume nicht vorhanden. Schließlich besteht der Vorteil, dass die Richtung des Kühlmittelstromes beliebig gewählt werden kann, so dass dem Betrieb der Kühlung im Gegenstrom nichts im Wege steht. Dadurch ergibt sich eine Vergleichmäßigung des Temperaturhaushaltes, so dass druckseitig und saugseitig enge Rotor-Gehäuse-Spalte eingehalten werden können, was für die Pumpeigenschaften (erreichbarer Enddruck, Saugvermögen etc.) der erfindungsgemäß gestalteten Vakuumpumpe von wesentlicher Bedeutung ist.

Bezüglich der Wahl der Dicke des Ringspaltes gilt, dass er relativ eng sein soll, zum Beispiel 0,2 bis 5 mm, vorzugsweise 0,5 bis 2 mm, wobei die Spaltdicke auch von dem verwendeten Kühlmittel, z.B. bei Vakuumpumpen üblicherweise verwendetes Öl, abhängt. Wesentlich ist offensichtlich, dass der Abstand der beiden wandnahen Grenzschichten relativ klein ist, so dass sie sich gegenseitig turbulent beeinflussen. Eine von den Grenzschichten unbeeinflusste und diese voneinander getrennt haltende, den Wärmeübergang behindernde Laminarströmung ist offensichtlich nicht vorhanden oder hat eine vernachlässigbar kleine Dicke.

Um eine wirksame Kühlung der Rotoren zu erreichen, muss die Geschwindigkeit des Kühlmittels (auch wieder abhängig von der Art des Kühlmittels) ausreichend hoch sein. Strömungsgeschwindigkeiten in der Größenordnung von 0,1 bis 1 m/s, vorzugsweise 0,3 bis 0,7 m/s, haben sich bei Kühlöl als zweckmäßig erwiesen. Mit bekannten Ölförderpumpen, seien es Zentrifugal-, Zahnrad- oder ähnliche Pumpen, können die erforderlichen Druckdifferenzen erzeugt werden.

Weitere Vorteile und Einzelheiten der Erfindung sollen anhand von in den Figuren 1 bis 9 schematisch dargestellten Ausführungsbeispielen erläutert werden. Es zeigen
- Figur 1 einen Schnitt durch eine Schraubenvakuumpumpe mit fliegend gelagerten Rotoren,
- Figur 2 einen Schnitt durch eine Schraubenvakuumpumpe mit beidseitig gelagerten Rotoren,
- Figuren 3 bis 5 Schnitte durch jeweils einen der beiden Rotoren einer Schraubenvakuumpumpe, bei dem die getrennte Zu- und Abfuhr des Kühlmittels zum Kühlspalt durch einen zentralen Hohlraum in der Rotorwelle erfolgt,
- Figur 6 einen Schnitt durch einen Rotor mit Mitteln zur Verlagerung des Kühlspaltes nach außen,
- Figuren 7 und 8 eine Lösung, bei der ein von der Welle unabhängiges Bauteil im Rotorhohlraum den Kühlspalt begrenzt, und
- Figur 9 eine Lösung mit einem aus zwei Abschnitten bestehenden Rotor.

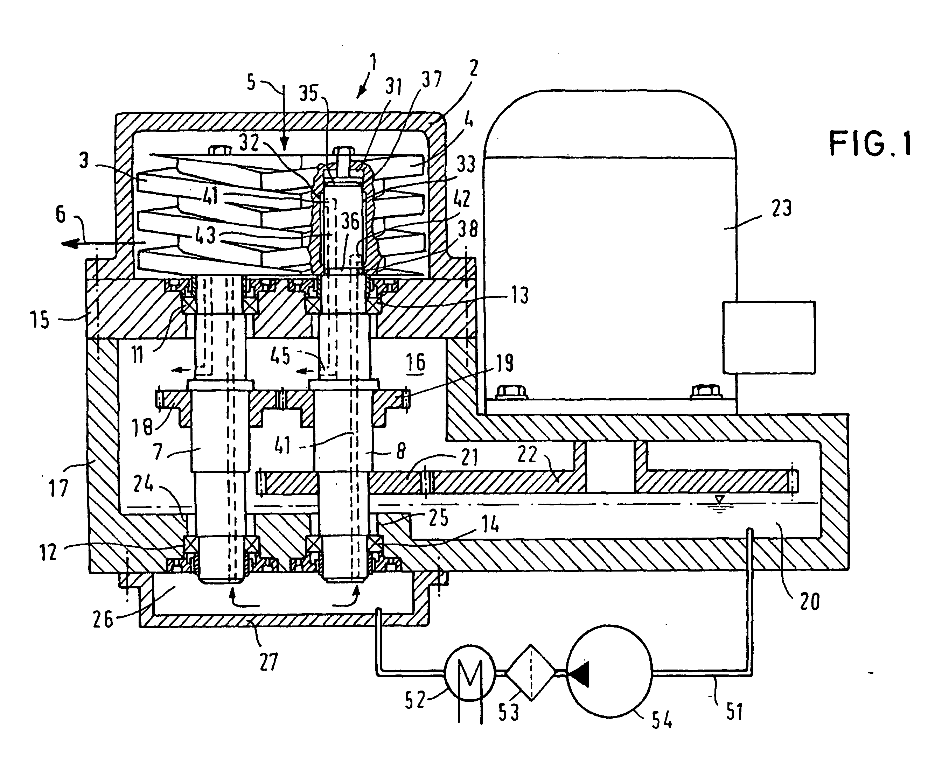

Die in Figur 1 dargestellte Schraubenvakuumpumpe 1 umfasst das Schöpfraumgehäuse 2 mit den Rotoren 3 und 4. Einlass 5 und Auslass 6 der Pumpe 1 sind schematisch durch Pfeile gekennzeichnet. Die Rotoren 3 und 4 sind auf den Wellen 7 bzw. 8 befestigt, die sich jeweils fliegend in zwei Lagern 11, 12 bzw. 13, 14 abstützen. Ein Lagerpaar 11, 13 befindet sich in einer Lagerscheibe 15, die den schmiermittelfreien Schöpfraum von einem Getrieberaum 16 trennt. Im Gehäuse 17 des Getrieberaumes 16 befinden sich die auf den Wellen 7 und 8 montierten Synchronisationszahnräder 18, 19 sowie ein dem Antrieb der Pumpe 1 dienendes Zahnradpaar 21, 22, von denen eines mit der Welle des vertikal neben der Pumpe 1 angeordneten Antriebmotors 23 gekoppelt ist. Außerdem hat der Getrieberaum die Funktion eines Ölsumpfes 20. Das zweite Lagerpaar 12, 14 der Wellen 7, 8 ist in Bohrungen 24, 25 angeordnet, die den Boden des Getrieberaumgehäuses 17 durchsetzen. Die Wellen 7, 8 ihrerseits durchsetzen die Bohrungen 24, 25 und enden in einem Öl enthaltenden Raum 26, der vom Gehäuse 17 sowie einer daran befestigten Wanne 27 gebildet wird.

Die Figur 1 lässt erkennen, dass die Rotoren 3 und 4 jeweils einen Hohlraum 31 aufweisen, in den sich die Welle 8 erstreckt und in dem sich der erfindungsgemäße Kühlspalt 32 befindet. Da nur der Rotor 4 im Teilschnitt dargestellt ist, wird die Erfindung nur anhand dieses Rotors 4 erläutert.

Bei der Lösung nach Figur 1 befindet sich der Ringspaltabschnitt 32 unmittelbar zwischen Welle 8 (bzw. 7) und Rotor 4 (bzw. 3). Die zylindrische Innenwandung des Rotorhohlraumes 31 ist dazu in ihrem mittleren Bereich mit einer Eindrehung 33 versehen, deren Tiefe der Dicke des Kühlspaltes 32 entspricht. Saugseitig und druckseitig liegt die Welle 8 der Innenwandung des Hohlraumes 31 dicht an. Zusätzlich ist die Welle 8 in diesen Bereichen mit Nuten 35 und 36 für Dichtringe 37 und 38 ausgerüstet, die eine dichte Trennung des Kühlspaltes 31 vom Schöpfraum sicherstellen.

Die Versorgung des Kühlspaltes 31 mit dem Kühlmittel erfolgt über die Welle 8. Sie ist mit einer ersten Bohrung 41 ausgerüstet, die sich vom unteren Ende der Welle 8 bis zum druckseitigen Ende des Kühlspaltes 32 erstreckt. Über eine Querbohrung 42 steht die Bohrung 41 mit dem Kühlspalt 31 in Verbindung. Über die Bohrungen 41 und 42 erfolgt die Zuführung des Kühlmittels zum Kühlspalt 32. Es durchströmt den Kühlspalt 32 von der Druckseite zur Saugseite des Rotors 4. Da die abzuführende Wärme maßgeblich auf der Druckseite des Rotors 4 entsteht, ist der Rotor 4 im Gegenstrom gekühlt.

Der Abführung des Kühlmittels dient eine zweite Bohrung 43 in der Welle 8. Sie erstreckt sich von der Saugseite des Kühlspaltes 32 bis in die Höhe des Getrieberaumes 16. Querbohrungen 44, 45 stellen jeweils die Verbindung der Bohrung 43 mit dem Kühlspalt 32 bzw. dem Getrieberaum 16 her.

Eine sichere Kühlung der Rotoren 3, 4 wird erreicht, wenn das Kühlmittel die relativ enge Kühlspalte 32 relativ schnell und störungsfrei (frei von Kavitationen und Verschmutzungen) durchströmt. Es ist deshalb zweckmäßig, neben der Kühlung und Filterung des Kühlmittels für eine ausreichende Förderkraft zu sorgen. Beim Ausführungsbeispiel nach Figur 1 steht dazu der Getrieberaum 16 bzw. der Ölsumpf 20 mit dem Raum 26 über eine Leitung 51 in Verbindung, in dem sich neben einem Kühler 52 und einem Filter 53 eine Ölpumpe 54 befindet, die z.B. als Zahnradpumpe ausgebildet ist. Die Ölpumpe 54 sorgt dafür, dass das Kühlmittel mit dem notwendigen Druck kavitationsfrei aus dem Raum 26 in die Bohrung 41 eintritt.

Es besteht auch die Möglichkeit, Ölpumpen (Zentrifugalpumpen, Zahnradpumpen) im Bereich der unteren Enden der Wellen 7, 8 anzuordnen. Diese müssen jedoch so ausgebildet sein, dass sie die Anforderungen an die gewünschte Fördereigenschaften erfüllen.

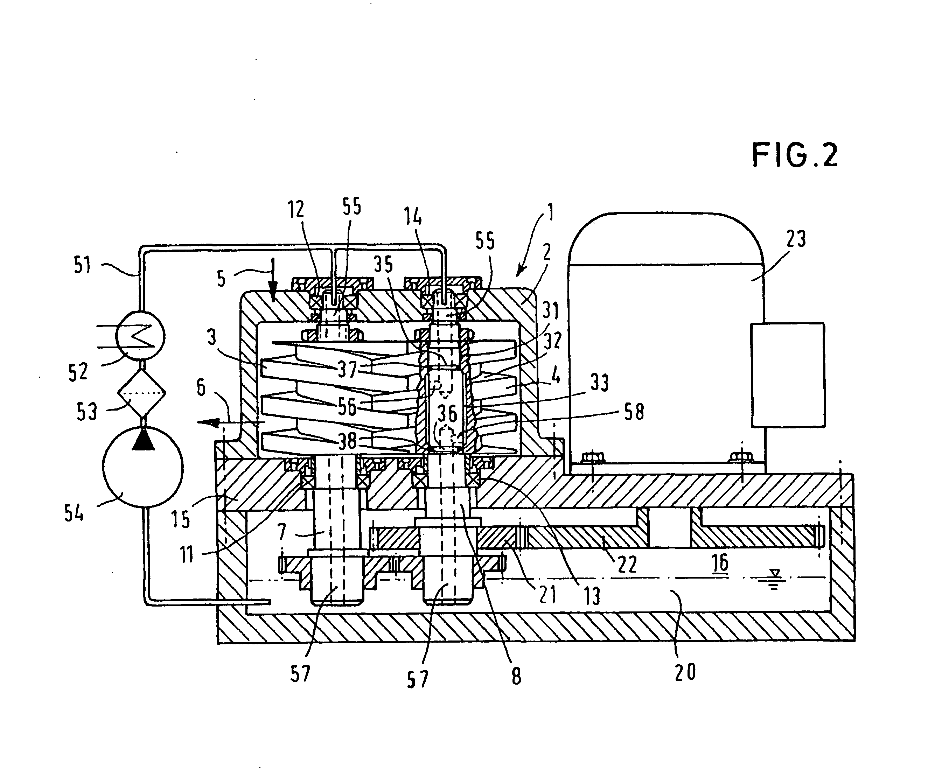

Figur 2 zeigt eine Ausführung, bei der die Wellen 7, 8 der Rotoren 3, 4 beidseitig gelagert sind, und zwar in der Lagerscheibe 5 (Lager 11, 13) und im Schöpfraumgehäuse 2 (Lager 12, 14). Die unteren Enden der Wellen 7, 8 enden im Getrieberaum 16.

Infolge der beidseitigen Lagerung der Wellen 7, 8 besteht in einfacher Weise die Möglichkeit, das Kühlmittel saugseitig zuzuführen. Dazu sind die Wellen saugseitig mit einer vorzugsweise zentrischen Sackbohrung 55 ausgerüstet, die sich bis zum saugseitigen Ende des Kühlspaltes 32 erstreckt. Über die Querbohrung 56 steht die Bohrung 55 mit dem Kühlspalt 32 in Verbindung. Druckseitig sind die Wellen 7, 8 mit einer Sackbohrung 57 versehen, die sich bis zum druckseitigen Ende des Spaltes 32 erstreckt und mit diesem über die Querbohrung 58 in Verbindung steht.

Zur Versorgung der Sackbohrungen 55 mit Kühlmittel stehen diese mit der Leitung 51 in Verbindung, die an den Ölsumpf 20 angeschlossen ist und in der sich Ölpumpe 54, Filter 53 und Kühler 52 befinden. Im beschriebenen Fall ist der Kühlspalt 32 von der Saugseite in Richtung Druckseite vom Kühlmittel durchströmt.

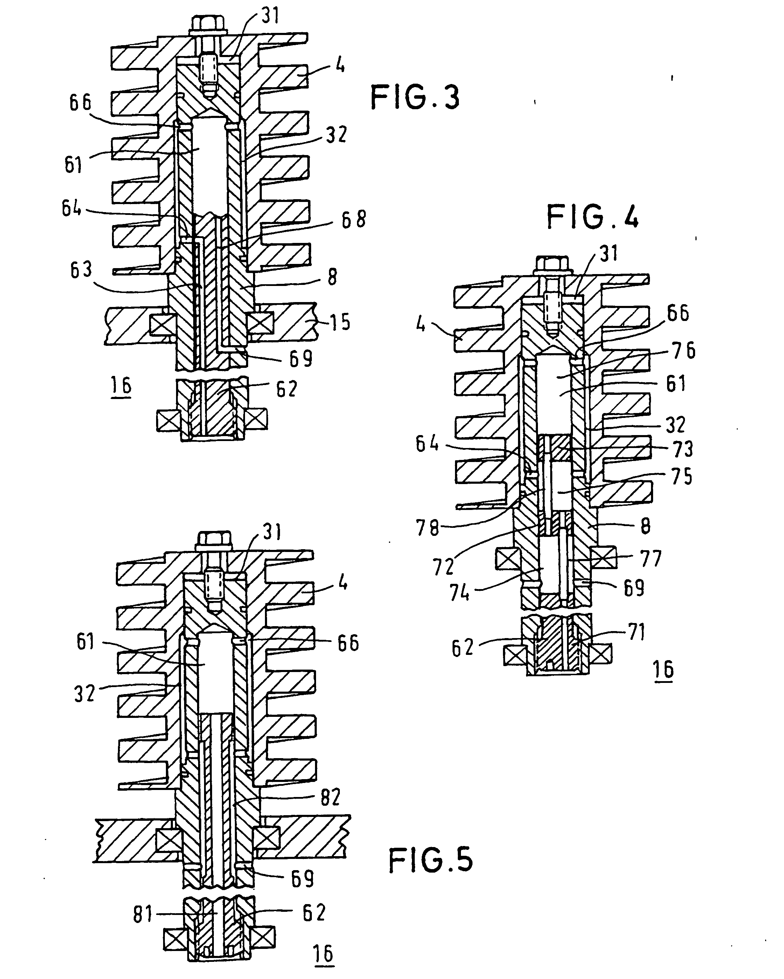

Das Ausführungsbeispiel nach Figur 3, das nur den Rotor 4 und die Welle 8 darstellt, zeigt eine weitere Möglichkeit der Zu- und Abführung des Kühlmittels zum bzw. vom Kühlspalt 32. Die Welle 8 ist mit einer zur Druckseite offenen, sich bis über das saugseitige Ende des Kühlspaltes 32 hinaus erstreckenden zentralen Sackbohrung versehen. Diese bildet eine Hohlraum 61, in dem sich ein Führungsbauteil 62 für das Kühlmittel befindet. Das Führungsbauteil 62 erstreckt sich vom unteren Ende der Welle 8 bis über das druckseitige Ende des Kühlspaltes 32 hinaus. Die Zuführung des Kühlmittels erfolgt über die Längsbohrung 63 im Führungsbauteil 62, die über miteinander fluchtende Querbohrungen 64 durch das Bauteil 62 und die Welle 8 mit dem druckseitigen Ende des Kühlspaltes 32 in Verbindung steht. In Höhe des saugseitigen Endes des Kühlspaltes 32 ist die Welle 8 mit einer oder mehreren Querbohrungen 66 ausgerüstet, die in den von der Sackbohrung 61 und der Stirnseite des Führungsbauteils 62 gebildeten Raum münden. Dieser steht über die Längsbohrung 68 und die miteinander fluchtenden Querbohrungen 69 (im Führungsbauteil 62 und in der Welle 8) mit dem Getrieberaum 16 (in Figur 3 nicht dargestellt) in Verbindung.

Figur 4 zeigt eine Lösung, bei der das Führungsbauteil 62 drei Abschnitte 71, 72, 73 umfasst, die den Hohlraum 61 in der Welle 8 in drei Teilräume 74, 75, 76 unterteilt, die sich jeweils in Höhe der Querbohrungen 69, 64 und 66 befinden. Durch geeignete Bohrungen in den Abschnitten 71 bis 73 sowie Leitungsabschnitte 77 und 78, die diese Bohrungen miteinander verbinden, kann eine separate Zu- und Abführung des Kühlmittels zum Kühlspalt realisiert werden. Das Führungsbauteil ist leicht zu montieren, da Bohrungen, die miteinander fluchten müssen, nicht vorhanden sind. Die Gegenstromkühlung kann in einfacher Weise realisiert werden.

Bei der Ausführung nach Figur 5 erfolgt die Zuführung des Kühlmittels im Gegensatz zu den Ausführungen nach den Figuren 3 und 4 durch eine zentrale Bohrung 81 im Führungsbauteil 62. Es gelangt in den von der Sackbohrung sowie dem Führungsbauteil 62 gebildeten Hohlraum 61 und über die Querbohrung 66 in den Kühlspalt 32. Die Austrittsbohrungen 64 stehen mit seitlichen Längsnuten oder einem freigedrehten Ringraum 82 im Führungsbauteil 62 in Verbindung. Die Längsnuten oder der Ringraum 82 erstrecken sich bis in Höhe des Getrieberaumes 16 und stehen dort mit den Querbohrungen 69 in Verbindung stehen.

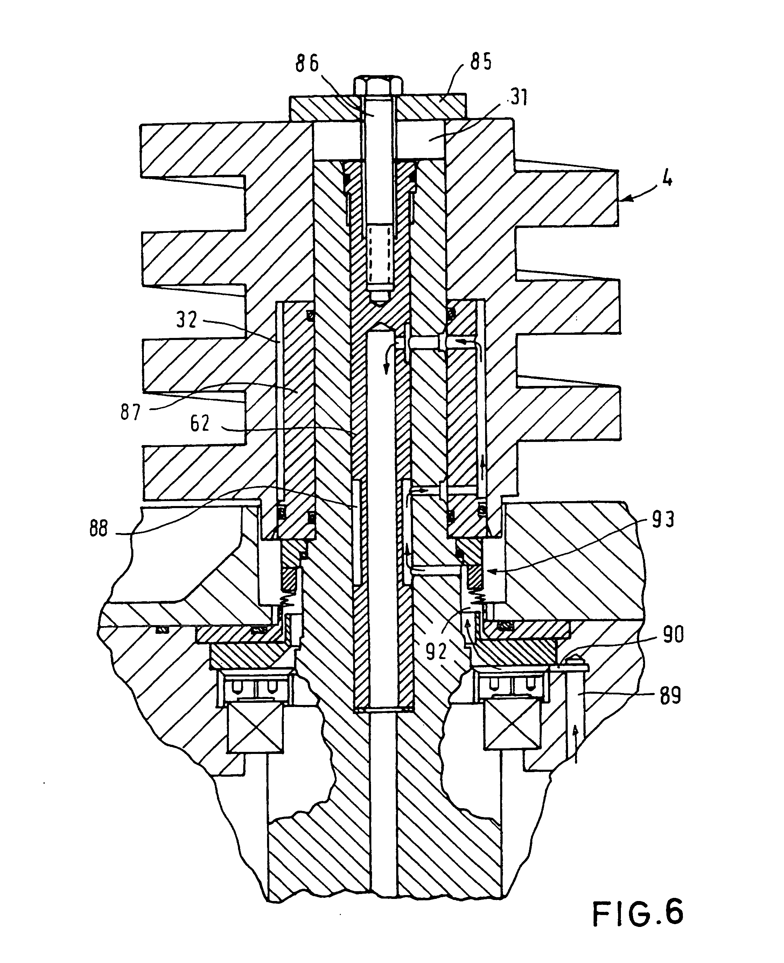

Die Ausführung nach Figur 6 unterscheidet sich von den vorstehend beschriebenen Ausführungen dadurch, dass die Welle 8 und der Rotor 4 durchgehend durchbohrt ist. Zur Bildung des Hohlraumes 31 ist eine saugseitig angeordnete Abdeckung 85 vorgesehen, die über eine Schraube 86 mit dem Führungsbauteil 62 in Verbindung steht. Das Führungsbauteil 62 ist von der Saugseite her fest eingesetzt. Es dient zusammen mit der Schraube 86 und der Abdeckung 85 der axialen Fixierung des Rotors 4. Die Welle 8 ist mit einer äußeren Hülse 87 ausgerüstet, die zusammen mit dem Rotor 4 den Kühlspalt 32 bildet, der sich bei dieser Ausführung im wesentlichen nur in Höhe der Druckseite des Rotors 4 erstreckt. Die radiale Verlegung des Kühlspaltes 32 nach außen verbessert die Kühlwirkung. Die Zuführung des Kühlmittels erfolgt nur über einen relativ kurzen Abschnitt einer Freidrehung 88 im Führungsbauteil 62. Bevor es in die Freidrehung 88 eintritt, durchströmt es Bohrungen 89, 90 in der Lagerscheibe 15 sowie den lagerseitigen Raum 92 einer Gleitringdichtung 93 und sorgt dort für den notwendigen Sperrdruck. Die Rückführung des Kühlmittels erfolgt über die zentrale Bohrung 81 im Führungsbauteil 62 bzw. in der Welle 8.

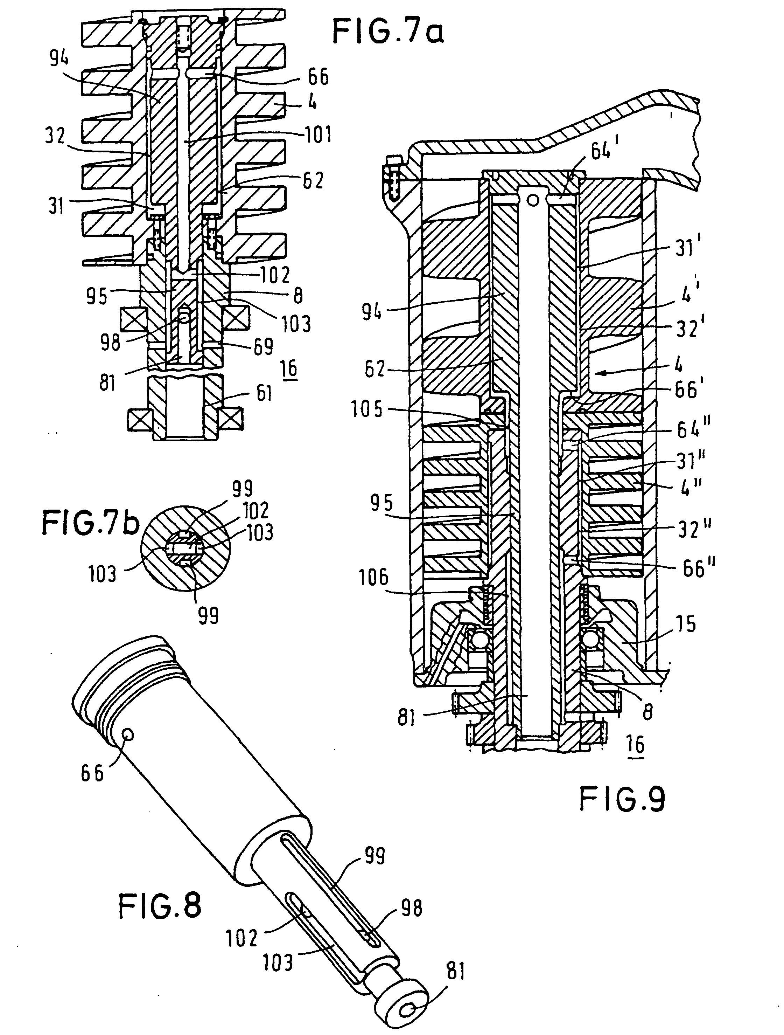

Bei der Lösung nach den Figuren 7a und 7b erstreckt sich die Welle 8 nicht bis in den Rotorhohlraum 31. Sie ist in Höhe der Druckseite mit dem Rotor 4 verbunden. Das Führungsbauteil 62 hat im Rotorhohlraum 31 einen Abschnitt 94 mit vergrößertem Durchmesser, welcher zusammen mit der Innenwandung des Rotors 4 den Kühlspalt 32 bildet. Ein zweiter Abschnitt 95, der gegenüber dem Abschnitt 94 einen kleineren Durchmesser hat, durchsetzt die Bohrung 61 in der Welle 8.

Um aus thermischen Gründen einerseits die Zufuhr des Kühlmittels von der offenen Seite der Bohrung 61 her über eine zentrale Bohrung 81 im Führungsbauteil 62 und andererseits eine Kühlung des Rotors 4 im Gegenstrom zu ermöglichen, ist es erforderlich, dass das Führungsbauteil 62 eine Kreuzung der Kühlmittelströme vorsieht. Dieses geschieht über Querbohrungen und äußere Nutabschnitte im Führungsbauteil 62, die im einzelnen folgendermaßen gestaltet sind (vgl. Figuren 7a, 7b und 8):

Das über die Sackbohrung 81 zentral zugeführte Kühlmittel gelangt über eine Querbohrung 98 in zwei einander gegenüberliegende Nutabschnitte 99 bis in den Hohlraum 31 (Druckseite). Danach durchströmt das Kühlmittel den Kühlspalt 32 und gelangt über die Querbohrungen 66 in einen zentral im Führungsbauteil gelegenen Leitungsabschnitt 101. Dieser erstreckt sich bis zu einer zweiten, saugseitig zur ersten Querbohrung 98 gelegenen Querbohrung 102. Die beiden Querbohrungen 98 und 102 sind etwa senkrecht zueinander ausgerichtet. Die Querbohrung 102 mündet in einander gegenüberliegende Nutabschnitte 103, die um etwa 90° gegenüber den Nutabschnitten 99 versetzt sind. Dadurch ist es möglich, dass das zurückströmende Kühlmittel durch diese Nutabschnitte 103 bis zu den Querbohrungen 69 im Bereich des Getrieberaumes 16 zu führen.

Beim Ausführungsbeispiel nach Figur 9 umfasst der Rotor 4 zwei Abschnitte 4', 4'' mit unterschiedlicher Gestaltung der Schraubengänge sowie mit jeweils einem Hohlraum 31' bzw. 31''. Die Welle 8 erstreckt sich bis in den Hohlraum 31'' des druckseitigen Rotorabschnittes 4" und bildet damit den Kühlspalt 32". Das Führungsbauteil 62 ist ähnlich gestaltet wie bei der Ausführung nach den Figuren 7, 8. Es weist einen Abschnitt 94 mit vergrößertem Durchmesser auf, der sich im Hohlraum 31' des Rotorabschnittes 4' befindet und zusammen mit der Innenwandung dieses Rotorabschnittes 4' den Kühlspalt 32' bildet. Ein weiterer Abschnitt 95 des Führungsbauteiles 62 mit kleinerem Durchmesser durchsetzt die zentrale Bohrung 61 in der Welle 8. Das Führungsbauteil 62 ist mit einer sich bis zur Saugseite des Rotors 4 erstreckenden zentralen Bohrung 81 versehen.

Der Einfachheit und Übersichtlichkeit halber ist eine Lösung dargestellt, bei der das Kühlmittel über die zentrale Bohrung 81 zugeführt wird und über seitliche Bohrungen 64' im Abschnitt 94 saugseitig in den Kühlspalt 32' einströmt. Über eine Freidrehung 66', 105 (oder auch über Längsnuten) sowie über Querbohrungen 64' steht das druckseitige Ende des Kühlspaltes 32' mit dem saugseitigen Ende des Kühlspaltes 32" in Verbindung, so dass die beiden Kühlspalte 32', 32" nacheinander vom Kühlmittel durchströmt werden. Über eine weitere Freidrehung 106 steht die druckseitige Ausströmöffnung 66" des Kühlspaltes 32" mit der Ausströmöffnung 69 in Höhe des Getrieberaumes 16 in Verbindung. Auch bei dieser Lösung besteht die Möglichkeit, das Führungsbauteil 62 gleichzeitig als Zuganker zu verwenden, und zwar zur Fixierung des Rotorabschnittes 4'.

Natürlich besteht bei der Ausführung nach Figur 9 auch die Möglichkeit, die Zu- und Abführungsleitungen des Kühlmittels so zu gestalten, dass die Kühlspalte 32' 32" getrennt und/oder im Gegenstrom versorgt werden.

Die Lösungen nach den Figuren 7 bis 9 sind insbesondere dann von Vorteil, wenn die Rotoren 3, 4 fliegend gelagert sind, da die Möglichkeit besteht, das Führungsbauteil 62 aus leichten Werkstoffen, z.B. Kunststoff, herzustellen. Dadurch kann die lagerferne Masse der Rotoren klein gehalten werden. Die Verwendung von Kunststoff oder ähnlichen Werkstoffen hat auch noch generell den Vorteil, dass sich zwischen dem zuströmenden und dem abströmenden Kühlmittel schlecht wärmeleitende Materialien befinden.

## Patentansprüche

1. Schraubenvakuumpumpe (1) mit Wellen (7, 8) und zwei auf den Wellen befestigten Rotoren (34) mit den folgenden Merkmalen:
- die Rotoren weisen jeweils einen zentralen Hohlraum (31) mit Einrichtungen zur Führung eines Kühlmittels auf,
- im Hohlraum (31) der Rotoren (3, 4) befinden sich mit dem Rotor rotierende Einbauten, die einen zylindrischen, relativ engen, vom Kühlmittel durchströmten Ringspaltabschnitt (32) bilden,
- die Versorgung des Ringspaltabschnittes (32) mit Kühlmittel erfolgt über voneinander getrennte, die Wellen durchsetzende Zu- und Abführungsleitungen,
- es sind Mittel zur Förderung des Kühlmittels vorgesehen,
**dadurch gekennzeichnet, dass** die Dicke des Spaltes 0,2 bis 5 mm, vorzugsweise 0,5 bis 2 mm, beträgt und dass die Mittel zur Förderung des Kühlmittels so ausgelegt sind, dass das Kühlmittel mit einer Geschwindigkeit von 0,1 bis 1 m/s, vorzugsweise 0,3 bis 0,7 m/s, durch den Spalt strömt.

2. Pumpe nach Anspruch 1, **dadurch gekennzeichnet, dass** die Strömungsrichtung so gewählt ist, dass das Kühlmittel von der Druckseite in Richtung Saugseite strömt.

3. Pumpe nach einem der Ansprüche 1 oder 2, **dadurch gekennzeichnet, dass** die Rotoren (3, 4) fliegend gelagert sind und dass die jeweilige Zuführungsleitung (41, 81) für das Kühlmittel eine zur Druckseite der Wellen (7, 8) hin offene Sackbohrung ist.

4. Pumpe nach Anspruch 1, 2 oder 3, **dadurch gekennzeichnet, dass** sich im Bereich der druckseitigen Enden der Wellen (7, 8) Kühlmittelpumpen befinden.

5. Pumpe nach einem der Ansprüche 1, 2 oder 3, **dadurch gekennzeichnet, dass** die Rotoren (3, 4) beidseitig gelagert sind und dass die jeweilige Zuführungsleitung (55) für das Kühlmittel eine zur Saugseite der Wellen (7, 8) hin offene Sackbohrung ist.

6. Pumpe nach einem der vorhergehenden Ansprüche, **dadurch gekennzeichnet, dass** der Abführung des Kühlmittels dienende Leitungen in einen Getrieberaum (16) münden.

7. Pumpe nach einem der vorhergehenden Ansprüche, **dadurch gekennzeichnet, dass** die axial gerichteten Zu- und/oder Abführungsleitungen als zentrale oder dezentrale Bohrungen in der Welle (7, 8) ausgebildet sind.

8. Pumpe nach einem der Ansprüche 1 bis 7, **dadurch gekennzeichnet, dass** die Welle (7, 8) mit einem Hohlraum (61) ausgerüstet ist und dass sich in diesem Hohlraum ein Führungsbauteil (62) für die Führung des Kühlmittels befindet.

9. Pumpe nach Anspruch 8, **dadurch gekennzeichnet**, die axial gerichteten Zu- und/oder Abführungsleitungen als zentrale oder dezentrale Bohrungen, als seitliche Längsnutenabschnitte oder als äußere Freidrehungen im Führungsbauteil ausgebildet sind.

10. Pumpe nach Anspruch 9, **dadurch gekennzeichnet, dass** axiale und radiale Leitungsabschnitte so im Führungsbauteil angeordnet sind, dass sie eine separate, sich kreuzende Führung des zugeführten Kühlmittels einerseits und des abgeführten Kühlmittels andererseits erlauben.

11. Pumpe nach einem der vorhergehenden Ansprüche, **dadurch gekennzeichnet, dass** die axial gerichteten Zu- und Abführungsleitungen über im wesentlichen radial gerichtete Bohrungen mit dem Spalt (32) in Verbindung stehen.

12. Pumpen nach einem der vorhergehenden Ansprüche, **dadurch gekennzeichnet, dass** sich der Ringspaltabschnitt (32) unmittelbar zwischen der Welle (7, 8) und der Innenwandung des Rotorhohlraumes (31) befindet.

13. Pumpe nach einem der Ansprüche 1 bis 11, **dadurch gekennzeichnet, dass** die Welle (7, 8) mit einer Hülse (87) versehen ist, deren Außenseite den Ringspalt (32) begrenzt.

14. Pumpe nach Anspruch 8, 9 oder 10 und einem der Ansprüche 1 bis 7, **dadurch gekennzeichnet, dass** das saugseitige Ende der Welle (7, 8) mit dem druckseitigen Ende des Rotors (3, 4) in Verbindung steht, dass sich das Führungsbauteil (2) bis in den Rotorhohlraum (31) hineinerstreckt und dass das Führungsbauteil den Kühlspalt (32) begrenzt.

15. Pumpe nach Anspruch 14, **dadurch gekennzeichnet, dass** das Führungsbauteil (62) aus leichtem Werkstoff, vorzugsweise Kunststoff besteht.

16. Pumpe nach einem der Ansprüche 12 bis 15, **dadurch gekennzeichnet, dass** der Kühlspalt (32) von einer Eindrehung (33) in einem der den Kühlspalt (32) begrenzenden Bauteile gebildet wird.

17. Pumpe nach Anspruch 8, 14, 15 oder 16, **dadurch gekennzeichnet, dass** der Rotor (3,4) durchbohrt ist und dass das Führungsbauteil (68) die Funktion eines Zugankers zur Befestigung des Rotors (3, 4) auf der Welle (7, 8) hat.

18. Pumpe nach einem der vorhergehenden Ansprüche, **dadurch gekennzeichnet, dass** der Rotor (3, 4) aus zwei Abschnitten (4', 4") besteht und dass für jeden Abschnitt ein Kühlspalt (32', 32") vorgesehen ist.

19. Pumpe nach Anspruch 21, **dadurch gekennzeichnet, dass** die Welle (7, 8) den druckseitigen Abschnitt (4''( des Rotors (4) durchsetzt, dass der saugseitige Abschnitt (4') mit dem druckseitigen Ende der Welle (7, 8) verbunden ist, dass sich das Führungsbauteil (62) bis in den Hohlraum des saugseitigen Rotorabschnittes (4') erstreckt und den Kühlspalt (32') begrenzt.

## Claims

1. Screw vacuum pump (1) comprising shafts (7, 8) and two rotors (34) fastened on the shafts, having the following features:
- the rotors have in each case a central cavity (31) with devices for guiding a coolant,
- situated in the cavity (31) of the rotors (3, 4) are built-in components, which rotate with the rotor and form a cylindrical, relatively narrow annular gap portion (32), through which the coolant flows,
- the supply of the annular gap portion (32) with coolant is effected through mutually separate feed and discharge lines, which penetrate the shafts,
- means of conveying the coolant are provided,
**characterized in that** the thickness of the gap is 0.2 to 5 mm, preferably 0.5 to 2 mm, and that the means of conveying the coolant are so designed that the coolant flows through the gap at a rate of 0.1 to 1 m/s, preferably 0.3 to 0.7 m/s.

2. Pump according to claim 1, **characterized in that** the flow direction is so selected that the coolant flows from the delivery side towards the suction side.

3. Pump according to one of claims 1 or 2, **characterized in that** the rotors (3, 4) are overhung and that the respective feed line (41, 81) for the coolant is a blind hole open towards the delivery side of the shafts (7, 8).

4. Pump according to claim 1, 2 or 3, **characterized in that** coolant pumps are situated in the region of the delivery-side ends of the shafts (7, 8).

5. Pump according to one of claims 1, 2 or 3, **characterized in that** the rotors (3, 4) are supported at both ends and that the respective feed line (55) for the coolant is a blind hole open towards the suction side of the shafts (7, 8).

6. Pump according to one of the preceding claims, **characterized in that** lines, which are used to discharge the coolant, open out into a gear compartment (16).

7. Pump according to one of the preceding claims, **characterized in that** the axially directed feed and/or discharge lines take the form of central or distributed bores in the shaft (7, 8).

8. Pump according to one of claims 1 to 7, **characterized in that** the shaft (7, 8) is equipped with a cavity (61) and that situated in said cavity is a guide component (62) for guiding the coolant.

9. Pump according to claim 8, **characterized in that** the axially directed feed and/or discharge lines take the form of central or distributed bores, lateral longitudinal groove portions or outer recesses in the guide component.

10. Pump according to claim 9, **characterized in that** axial and radial line portions are disposed in such a way in the guide component that they allow a separate, intersecting guidance of the fed coolant, on the one hand, and of the discharged coolant, on the other hand.

11. Pump according to one of the preceding claims, **characterized in that** the axially directed feed and discharge lines are connected by substantially radially directed bores to the slot (32).

12. Pumps according to one of the preceding claims, **characterized in that** the annular gap portion (32) is situated directly between the shaft (7, 8) and the inner wall of the rotor cavity (31).

13. Pump according to one of claims 1 to 11, **characterized in that** the shaft (7, 8) is provided with a sleeve (87), the outer side of which delimits the annular gap (32).

14. Pump according to claim 8, 9 or 10 and one of claims 1 to 7, **characterized in that** the suction-side end of the shaft (7, 8) is connected to the delivery-side end of the rotor (3, 4), that the guide component (2) extends right into the rotor cavity (31) and that the guide component delimits the cooling gap (32).

15. Pump according to claim 14, **characterized in that** the guide component (62) is made of lightweight material, preferably plastics material.

16. Pump according to one of claims 12 to 15, **characterized in that** the cooling gap (32) is formed by a turned groove (33) in one of the components that delimit the cooling gap (32).

17. Pump according to claim 8, 14, 15 or 16, **characterized in that** the rotor (3, 4) is bored through and that the guide component (68) has the function of a tie rod for fastening the rotor (3, 4) on the shaft (7, 8).

18. Pump according to one of the preceding claims, **characterized in that** the rotor (3, 4) comprises two portions (4', 4") and that for each portion a cooling gap (32', 32") is provided.

19. Pump according to claim 21, **characterized in that** the shaft (7, 8) penetrates the delivery-side portion (4") of the rotor (4), that the suction-side portion (4') is connected to the delivery-side end of the shaft (7, 8), that the guide component (62) extends right into the cavity of the suction-side rotor portion (4') and delimits the cooling gap (32').

## Revendications

1. Pompe à vide à vis (1) comprenant des arbres (7, 8) et deux rotors (3, 4) fixés sur les arbres, avec les caractéristiques suivantes :
- les rotors présentent respectivement un espace creux (31) central avec des dispositifs de guidage d'un réfrigérant,
- dans l'espace creux (31) des rotors (3, 4) se situent des pièces de montage en rotation avec le rotor qui forment un segment d'interstice annulaire (32) cylindrique relativement étroit traversé par l'agent réfrigérant,
- l'alimentation en réfrigérant du segment d'interstice annulaire (32) s'effectue par des conduites d'amenée et d'évacuation séparées l'une de l'autre et traversant les arbres,
- des moyens sont prévus pour le transport de l'agent réfrigérant,
**caractérisée en ce que** la largeur de l'interstice est de 0,2 à 5 mm, de préférence de 0,5 à 2 mm, et les moyens pour transporter l'agent réfrigérant sont conçus de manière à ce que l'agent réfrigérant traverse l'interstice à une vitesse de 0,1 à 1 m/s, de préférence de 0,3 à 0,7 m/s.

2. Pompe selon la revendication 1, **caractérisée en ce que** le sens de l'écoulement est choisi tel que l'agent réfrigérant s'écoule du côté refoulement vers le côté aspiration.

3. Pompe selon l'une quelconque des revendications 1 ou 2, **caractérisée en ce que** les rotors (3, 4) sont logés de façon mobile, et **en ce que** la conduite d'amenée (41, 81) respective de l'agent réfrigérant est un trou borgne ouvert vers le côté refoulement des arbres (7, 8).

4. Pompe selon la revendication 1, 2 ou 3, **caractérisée en ce que** des pompes à réfrigérant se trouvent dans la zone des extrémités côté refoulement des arbres (7, 8).

5. Pompe selon l'une quelconque des revendications 1, 2 ou 3, **caractérisée en ce que** les rotors (3, 4) sont logés des deux côtés, et **en ce que** la conduite d'amenée (55) respective de l'agent réfrigérant est un trou borgne ouvert vers le côté aspiration des arbres (7, 8).

6. Pompe selon l'une quelconque des revendications précédentes, **caractérisée en ce que** des conduites servant à évacuer l'agent réfrigérant débouchent dans une chambre de transmission (16).

7. Pompe selon l'une quelconque des revendications précédentes, **caractérisée en ce que** les conduites d'amenée et/ou d'évacuation orientées axialement ont la forme d'alésages centraux ou non dans l'arbre (7, 8).

8. Pompe selon l'une quelconque des revendications 1 à 7, **caractérisée en ce que** l'arbre (7, 8) est muni d'un espace creux (61), et **en ce que** dans cet espace creux se trouve un élément de guidage (62) pour le guidage de l'agent réfrigérant.

9. Pompe selon la revendication 8, **caractérisée en ce que** les conduites d'amenée et/ou d'évacuation orientées axialement ont la forme d'alésages centraux ou non centraux, de segments de rainures longitudinales latéraux ou d'alésages flottants extérieurs dans l'élément de guidage.

10. Pompe selon la revendication 9, **caractérisée en ce que** des segments de conduite axiaux et radiaux sont disposés dans l'élément de guidage de telle sorte qu'ils permettent un guidage séparé croisé de l'agent réfrigérant amené d'une part, et de l'agent réfrigérant évacué d'autre part.

11. Pompe selon l'une quelconque des revendications précédentes, **caractérisée en ce que** les conduites d'amenée et d'évacuation orientées axialement sont en communication avec l'interstice (32) par l'intermédiaire d'alésages s'étendant pour l'essentiel radialement.

12. Pompe selon l'une quelconque des revendications précédentes, **caractérisée en ce que** le segment d'interstice annulaire (32) se situe directement entre l'arbre (7, 8) et la paroi intérieure de l'espace creux de rotor (31).

13. Pompe selon l'une quelconque des revendications 1 à 11, **caractérisée en ce que** l'arbre (7, 8) est muni d'une douille (87) dont la face extérieure délimite l'interstice annulaire (32).

14. Pompe selon la revendication 8, 9 ou 10 et l'une quelconque des revendications 1 à 7, **caractérisée en ce que** l'extrémité côté aspiration de l'arbre (7, 8) est en communication avec l'extrémité côté refoulement du rotor (3, 4), **en ce que** l'élément de guidage (2) s'étend jusque dans l'espace creux de rotor (31) et l'élément de guidage délimite l'interstice de refroidissement (32).

15. Pompe selon la revendication 14, **caractérisée en ce que** l'élément de guidage (62) est réalisé à partir d'un matériau léger, de préférence une matière plastique.

16. Pompe selon l'une quelconque des revendications 12 à 15, **caractérisée en ce que** l'interstice de refroidissement (32) est formé par une gorge (33) dans l'un des composants délimitant l'interstice de refroidissement (32).

17. Pompe selon la revendication 8, 14, 15 ou 16, **caractérisée en ce que** le rotor (3, 4) est traversant, et **en ce que** l'élément de guidage (68) assure la fonction d'un tirant d'ancrage pour fixer le rotor (3, 4) sur l'arbre (7, 8).

18. Pompe selon l'une quelconque des revendications précédentes, **caractérisée en ce que** le rotor (3, 4) est composé de deux segments (4', 4''), et pour chaque segment un interstice de refroidissement (32', 32'') est prévu.

19. Pompe selon la revendication 21, **caractérisée en ce que** l'arbre (7, 8) traverse le segment côté refoulement (4'') du rotor (4), **en ce que** le segment côté aspiration (4') est relié à l'extrémité côté refoulement de l'arbre (7, 8), **en ce que** l'élément de guidage (62) s'étend jusque dans l'espace creux du segment de rotor côté aspiration (4') et délimite l'interstice de refroidissement (32').
